Europäisches Patentamt

European Patent Office

Office européen des brevets

(11) Numéro de publication: **0 351 258**
**A2**

## (12) DEMANDE DE BREVET EUROPEEN

(21) Numéro de dépôt: **89401591.6**

(22) Date de dépôt: **08.06.89**

(51) Int. Cl.5: **F 17 C 13/04**
**F 16 K 3/02, G 05 D 16/06**

(30) Priorité: **10.06.88 FR 8807789**

(43) Date de publication de la demande:
**17.01.90 Bulletin 90/03**

(84) Etats contractants désignés:
**AT BE CH DE ES FR GB GR IT LI LU NL SE**

(71) Demandeur: **SOCIETE DE FABRICATION**
**D'INSTRUMENTS DE MESURE (S.F.I.M.)**
**13, avenue Marcel Ramolfo-Garnier**
**F-91344 Massy Cédex (FR)**

(72) Inventeur: **Silber, Gérard**
**15, Résidence de la Croix blanche**
**F-91380 Chilly-Mazarin (FR)**

**Renner, Gilles**
**21, rue de Paris**
**F-91200 Palaiseau (FR)**

(74) Mandataire: **Ahner, Francis et al**
**CABINET REGIMBEAU 26, avenue Kléber**
**F-75116 Paris (FR)**

(54) **Détendeur oscillant pour fluide gazeux, notamment pour oxygène haute pression.**

(57) L'invention concerne un détendeur oscillant pour fluide gazeux, comportant un boîtier avec chambre intérieure de détente communiquant en permanence avec la sortie pour le fluide basse pression, et périodiquement avec l'entrée pour fluide haute pression par l'intermédiaire d'un système d'étanchéité oscillant.

Conformément à l'invention, le système d'étanchéité (108) est essentiellement constitué par une partie fixe en céramique (109) et une partie mobile en céramique (110), ces parties étant en permanence en contact glissant l'une contre l'autre et comportant chacune une ouverture traversante (111, 112) pour établir ou fermer la communication ; la partie mobile en céramique (110) est en outre reliée à un système d'entraînement (118) lui-même accouplé à une cloison mobile (113) de la chambre de détente (106).

Application notamment aux détendeurs oscillants pour oxygène haute pression, en particulier dans le domaine de l'aéronautique et de la soudure.

FIG_1

**Description**

## DETENDEUR OSCILLANT POUR FLUIDE GAZEUX, NOTAMMENT POUR OXYGENE HAUTE PRESSION

La présente invention concerne les détendeurs oscillants pour fluides gazeux, et plus particulièrement les détendeurs pour oxygène haute pression.

L'application à l'oxygène haute pression est plus spécialement visée, mais elle ne constitue pas la seule application concernée par l'invention.

Ce type d'application se rencontre surtout dans le domaine de l'aéronautique, par exemple pour la réalisation de centrales de secours oxygène, mais aussi dans le domaine médical, ainsi que dans le domaine de la soudure.

Lorsque les détendeurs oscillants peuvent ou doivent être concernés par l'oxygène gazeux, il est bien connu que de multiples précautions doivent être prises.

En effet, l'oxygène est comburant d'autant plus réactif que sa pression est plus élevée. Les recherches ont montré que l'oxygène sous haute pression peut réagir avec de nombreux matériaux métalliques et non-métalliques.

On cite fréquemment deux sources possibles d'inflammation. La première source possible d'inflammation réside dans la présence de petites particules, métalliques ou non-métalliques, qui sont accélérées jusqu'à un régime sonique dans des orifices de l'appareil, puis sont projetées contre des parois : les chocs qui en résultent risquent d'entraîner une inflammation des particules et/ou même des parois concernées si l'un des matériaux réagit avec l'oxygène, et de ce fait une détérioration à tout le moins partielle de l'appareil (le système d'étanchéité est en général le premier concerné), ce qui est extrêmement dangereux. La deuxième source possible d'inflammation réside dans le fait qu'un matériau peut également s'enflammer à la suite d'un échauffement par compression adiabatique, résultant notamment d'un choc pneumatique.

Le brevet français N° 382 670 décrit un détendeur oscillant pour fluide gazeux, notamment pour oxygène haute pression, comportant un boîtier muni d'une entrée pour le fluide haute pression et d'une sortie pour le fluide basse pression, ledit boîtier comprenant une chambre intérieure de détente communiquant en permanence avec ladite sortie, et périodiquement avec ladite entrée par l'intermédiaire d'un système d'étanchéité susceptible d'osciller entre une position d'ouverture et une position de fermeture. La fermeture et l'ouverture de ce détendeur se font à l'aide d'un système à clapet dont la partie mobile est une bille en acier ou en nickel, sur laquelle agit une vis actionnée par une membrane, par l'intermédiaire d'une bielle et d'un bras de levier. La bille métallique était destinée à remplacer les clapets en ébonite des détendeurs plus anciens, afin d'éviter les inconvénients inhérents à ce type de matériau (usure rapide, fermeture imprécise).

Le brevet français précité montre que le cas de l'oxygène pose problème depuis longtemps, et que le choix des matériaux constituant le système à clapet est particulièrement critique pour une telle application.

Le système à clapet pouvait aussi être monté différemment, par exemple en utilisant un levier pivotant, comme illustré dans le brevet français N° 493 328, ou plus récemment dans la demande de brevet européen N° 0 266 253.

En effet, l'inflammation se propage d'autant plus rapidement que les matériaux utilisés sont réactifs, et que des petites particules sont collées aux parois ou sont en suspension dans l'oxygène.

Ceci permet de mieux comprendre pourquoi les détendeurs actuels, utilisant en général également des systèmes d'étanchéité à clapet, mais avec un clapet en matériau fluoré (tel que ceux commercialisés sous les marques Kel-F, Viton, Vespel), présentent des risques lorsqu'ils sont utilisés en atmosphère d'oxygène gazeux sous très haute pression. En effet, ces matériaux finissent par s'éroder à la suite de frottements et/ou de chocs, ce qui entraîne précisément la formation de ces petites particules qui favorisent l'inflammation.

Il a déjà été ainsi récemment proposé de réaliser un détendeur oscillant pour oxygène haute pression (les pressions concernées pouvant atteindre 250 x $10^5$ Pa), comportant également un boîtier muni d'une entrée pour le fluide haute pression et d'une sortie pour le fluide basse pression, ledit boîtier comprenant une chambre intérieure de détente communiquant en permanence avec ladite sortie, et périodiquement avec ladite entrée par l'intermédiaire d'un système d'étanchéité susceptible d'osciller entre une position d'ouverture et une position de fermeture. Plus précisément le système d'étanchéité utilisé était là encore essentiellement constitué par un système à clapet, mais avec une pièce fixe en matériau fluoré, et une pièce mobile comportant une tige creuse dont l'extrémité biseautée venait périodiquement en contact de la pièce fixe. La pièce mobile était soumise à l'action d'un ressort de rappel tendant à ouvrir le système, ressort dont la raideur pouvait être réglée en fonction des conditions de pression concernées.

Ce dernier type de détendeur a été largement utilisé pour réguler une pression d'oxygène à partir d'une source haute pression (250 x $10^5$ Pa par exemple) dans le domaine aéronautique, la pression d'oxygène régulée allant selon le cas de $10^3$ à $50.10^5$ Pa.

Cependant, la présence d'un système à clapet implique des risques d'inflammation non négligeables lorsqu'on utilise de l'oxygène à très haute pression (risques de coups de feu et/ou d'inflammation spontanée) : dans ce cas, il s'ensuit une destruction du clapet, donc une rupture de l'étanchéité côté haute pression, ce qui induit une admission d'oxygène haute pression avec un effet de chalumeau, et de ce fait aboutit très rapidement à une situation extrêmement dangereuse.

Ceci amène les spécialistes à constater que de tels détendeurs ne donnent pas pleinement satisfaction, car on ne parvient pas à éviter dans le système d'étanchéité la présence d'arêtes vives appliquées contre un matériau malléable, avec les inconvénients déjà cités.

Il a été également proposé des centrales de secours oxygène, incluant un système d'étanchéité du type à clapet, mais avec deux ressorts antagonistes. Du côté de l'entrée, on trouvait un clapet conique soumis à l'action d'un petit ressort tendant à l'appliquer contre son siège (orifice de boîtier) ; du côté de la chambre de détente, on trouvait un poussoir monté sur la coupelle d'une membrane, la coupelle étant soumise, à l'extérieur de la chambre de détente, à l'action d'un gros ressort.

L'avantage par rapport aux dispositifs du type précédent, outre la robustesse de l'appareil, réside dans la présence du petit ressort qui assure une sécurité de fermeture. Cependant, on retrouve les mêmes inconvénients que précédemment, inhérents aux systèmes à clapet et siège, au niveau des risques d'inflammation.

Il est intéressant d'examiner les solutions adoptées pour l'oxygène gazeux, non plus pour des détendeurs, mais pour des robinets progressifs.

Selon un premier type de robinet, prévu aussi bien pour des pressions hautes ou basses, on a utilisé un clapet tournant, se terminant par un épaulement d'appui et une pointe conique axiale. En position de fermeture, l'épaulement venait au contact d'un joint en matériau fluoré (notamment celui commercialisé sous la marque Kel-F), la pointe conique pénétrant dans l'alésage central du joint à l'ouverture, l'orifice était très progressivement démasqué grâce à l'action de la pointe conique, faisant ainsi fonction de frein de débit.

Selon un autre type de robinet, largement commercialisé à bord d'avions de ligne, on utilisait un clapet tournant en argent, dont la tête présentait un évidement intérieur au voisinage de sa face d'appui contre un siège en métal dur. Finalement, la malléabilité de l'argent a fini par présenter plus d'inconvénients que d'avantages : outre son prix, l'étanchéité restait douteuse (surtout à haute pression), et les risques de déformation plastique en cas de serrage excessif restaient importants. Comme précédemment, la tête du clapet se prolongeait par une tige centrale saillante pour assurer une fonction de frein de débit.

Ainsi, on constate que l'enseignement représenté par les solutions apportées pour des appareils voisins par leur domaine d'application, tendait à renforcer le caractère indispensable du système à clapet, avec un matériau malléable (métallique ou non) sur un matériau dur.

Cette constatation rendait encore plus difficile la réalisation d'appareils fiables et étanches, avec lesquels on parviendrait à diminuer très sensiblement les risques d'inflammation.

L'invention a précisément pour objet de réaliser un détendeur oscillant pour fluide gazeux, dont la structure permette d'utiliser avec une grande sécurité de l'oxygène haute pression.

L'invention a également pour objet de réaliser un détendeur plus performant que les détendeurs précités, notamment au niveau de la fiabilité et de l'étanchéité, tout en restant de conception simple.

Il s'agit plus particulièrement d'un détendeur oscillant pour fluide gazeux, notamment pour oxygène haute pression, comportant un boîtier muni d'une entrée pour le fluide haute pression et d'une sortie pour le fluide basse pression, ledit boîtier comprenant une chambre intérieure de détente communiquant en permanence avec ladite sortie, et périodiquement avec ladite entrée par l'intermédiaire d'un système d'étanchéité susceptible d'osciller entre une position d'ouverture et une position de fermeture, caractérisé par le fait que le système d'étanchéité est essentiellement constitué par une partie fixe en céramique et une partie mobile en céramique, lesdites parties étant en permanence en contact glissant l'une contre l'autre et comportant chacune une ouverture traversante pour établir ou fermer la communication selon la position relative desdites ouvertures, et par le fait que la partie mobile en céramique est reliée à un système d'entraînement assurant un mouvement de translation et/ou de rotation à ladite partie mobile, ledit système d'entraînement étant lui-même accouplé à une cloison mobile de la chambre de détente, des moyens étant associés à ladite cloison mobile pour tendre à rappeler en permanence ledit système d'étanchéité vers sa position d'ouverture.

Selon un mode de réalisation particulier, la partie mobile en céramique est réalisée sous forme d'un tiroir coulissant mobile en translation contre la partie fixe en céramique.

De préférence alors le tiroir coulissant se déplace dans un évidement de la partie fixe en céramique ou entre deux lames constituant ladite partie fixe en particulier, le tiroir coulissant est soumis à l'action d'un ressort tendant à rappeler ledit tiroir contre l'extrémité d'une tige d'actionnement faisant partie du système d'entraînement. En variante, le tiroir coulissant se déplace contre une lame unique constituant la partie fixe en céramique ; en particulier, le tiroir coulissant présente un organe de liaison permettant une liaison d'accouplement à une tige d'actionnement faisant partie du système d'entraînement.

Selon un autre mode de réalisation, la partie mobile en céramique est réalisée sous forme d'un boisseau mobile en translation et/ou rotation et coulissant dans un évidement associé de la partie fixe en céramique.

De préférence alors, le boisseau est accouplé en translation et/ou rotation à une tige d'actionnement faisant partie du système d'entraînement en particulier, le boisseau est solidarisé, par exemple par collage, à l'extrémité de la tige d'actionnement.

Selon encore un autre mode de réalisation, la partie mobile en céramique est réalisée sous forme d'un disque tournant, en appui contre la partie fixe en céramique qui est réalisé sous forme d'un disque fixe.

Avantageusement, le disque tournant est soumis, directement ou indirectement, à l'action d'un ressort favorisant le maintien dudit disque tournant en appui contre le disque fixe. De préférence, le disque fixe comporte une ouverture traversante sensiblement parallèle à son axe, l'ouverture traversante du disque tournant étant de préférence coudée pour une sortie dans une direction sensiblement perpendiculaire audit axe. En variante, le disque tournant est accouplé en rotation à une tige d'actionnement coaxiale, faisant partie du système d'entraînement en particulier, le disque tournant est solidarisé, par exemple par collage, à l'extrémité de la tige d'actionnement.

Selon une caractéristique avantageuse, lorsqu'il s'agit d'un détendeur dans lequel la direction d'oscillation de la cloison mobile de la chambre de détente est sensiblement perpendiculaire à la direction de déplacement du tiroir coulissant, le système d'entraînement est essentiellement constitué par une tige formant poussoir d'actionnement, dont une extrémité contacte le tiroir coulissant et présentant une liaison filetée avec le boîtier, et par un organe de transmission solidaire de ladite cloison mobile et assurant une rotation de ladite tige autour de son axe.

En variante, lorsque la direction d'oscillation de la cloison mobile de la chambre de détente est sensiblement parallèle à la direction de déplacement du tiroir coulissant, le système d'entraînement est de préférence essentiellement constitué par une tige formant poussoir d'actionnement, dont une extrémité contacte le tiroir coulissant, et reliée par son autre extrémité à ladite cloison mobile.

Selon une autre caractéristique avantageuse, lorsqu'il s'agit d'un détendeur dans lequel la direction d'oscillation de la cloison mobile de la chambre de détente est sensiblement perpendiculaire à l'axe du boisseau, le système d'entraînement est essentiellement constitué par une tige d'actionnement dont une extrémité est accouplée au moins en rotation au boisseau, et par un organe de transmission solidaire de ladite cloison mobile et assurant une rotation de ladite tige autour de son axe. En particulier, la tige d'actionnement présente une liaison filetée avec le boîtier, et est accouplée en rotation et en translation au boisseau.

En variante, lorsque la direction d'oscillation de la cloison mobile de la chambre de détente est sensiblement parallèle à l'axe du boisseau, le système d'entraînement est de préférence essentiellement constitué par une tige formant poussoir d'actionnement, dont une extrémité contacte le boisseau, et reliée par son autre extrémité à ladite cloison mobile.

Selon encore une autre caractéristique avantageuse, lorsqu'il s'agit d'un détendeur dans lequel la direction d'oscillation de la cloison mobile de la chambre de détente est sensiblement perpendiculaire à l'axe du disque mobile, le système d'entraînement est essentiellement constitué par une tige d'actionnement dont une extrémité est accouplée en rotation au disque mobile, et par un organe de transmission solidaire de ladite cloison mobile et assurant une rotation de ladite tige autour de son axe.

De préférence, l'organe de transmission précité est une crémaillère coopérant avec une denture extérieure de la tige d'actionnement. En variante, il pourra s'agir d'une biellette coopérant avec un pion de liaison prévu sur la tige d'actionnement.

Il est avantageux que la cloison mobile est constituée par une membrane dont la partie centrale est rigidifiée, un ressort étant prévu en appui contre ladite partie centrale, à l'extérieur de la chambre de détente, pour constituer les moyens de rappel de ladite cloison mobile. En variante, la cloison mobile sera constituée par un soufflet dont la partie centrale est rigidifiée, un ressort étant prévu en appui contre ladite partie centrale, à l'extérieur de la chambre de détente, pour constituer les moyens de rappel de ladite cloison mobile ; selon une autre variante possible, cette cloison mobile sera constituée par un piston coulissant de façon étanche dans le boîtier, un ressort étant prévu en appui contre ledit piston, à l'extérieur de la chambre de détente, pour constituer les moyens de rappel de ladite cloison mobile.

D'autres caractéristiques et avantages de l'invention apparaîtront plus clairement à la lumière de la description qui va suivre et des dessins annexés, concernant un mode de réalisation particulier, en référence aux figures, où :

- la figure 1 est une vue en coupe illustrant un détendeur oscillant conforme à l'invention, dans lequel la partie mobile en céramique du système d'étanchéité est un tiroir coulissant ;
- la figure 2 est une coupe partielle selon II-II de la figure 1, permettant de distinguer les moyens de transmission par crémaillère du système, d'entraînement associé au tiroir ;
- la figure 3 est une vue en coupe illustrant une variante du détendeur de la figure 1, dans laquelle on utilise un soufflet pour constituer la cloison mobile de la chambre de détente, et dans laquelle les moyens de transmission du système d'entraînement sont à biellette, comme cela est visible sur la coupe associée de la figure 4, prise selon la ligne IV-IV de la figure 3 ;
- la figure 5 est une vue en coupe illustrant une autre variante du détendeur de la figure 1, dans laquelle on utilise un piston pour constituer la cloison mobile de la chambre de détente, et dans laquelle le tiroir en céramique coulisse entre deux lames fixes en céramique ;
- la figure 6 est une vue en coupe illustrant un autre type de détendeur oscillant conforme à l'invention, dans lequel la partie mobile en céramique du système d'étanchéité est un tiroir ou un boisseau, et dans lequel le système d'entraînement se réduit à une tige poussoir reliée, directement ou indirectement, à la cloison mobile ;
- les figures 7 et 8 illustrent deux variantes du détendeur de la figure 6, dans lesquelles la membrane est remplacée respectivement par un soufflet ou un piston ;
- la figure 9 est une coupe partielle illustrant une variante particulière dans laquelle le tiroir coulissant en céramique se déplace contre une lame fixe unique en céramique ;
- la figure 10 est une vue en coupe illustrant encore un autre type de détendeur oscillant conforme à l'invention, dans lequel la partie mobile en céramique du système d'étanchéité est un boisseau mobile en rotation et translation ;

- les figures 11 et 12 sont des coupes selon XI-XI et XII-XII de la figure 10, illustrant respectivement la transmission associée (ici par crémaillère), et le système à boisseau (en position fermé) ;

- la figure 13 est une variante du détendeur de la figure 10, dans laquelle la membrane est remplacée par un soufflet, et l'entraînement à crémaillère par un entraînement à biellette ;

- la figure 14 est une autre variante du détendeur de la figure 10, dans laquelle le boisseau est mobile en rotation mais pas en translation (on retrouve par ailleurs le piston remplaçant la membrane, et un entraînement à biellette, comme déjà mentionné précédemment) ;

- la figure 15 est une vue en coupe illustrant encore un autre type de détendeur oscillant conforme à l'invention, dans laquelle les parties fixe et mobile en céramique du système d'étanchéité sont des disques appliqués l'un contre l'autre, le système d'entraînement (ici par crémaillère) étant visible sur la coupe associée de la figure 16, prise selon la ligne XVI-XVI de la figure 15 ;

- la figure 17 est une vue en coupe illustrant une variante du détendeur de la figure 15, avec cloison mobile en soufflet et entraînement par biellette (la coupe associée de la figure 18 est prise selon la ligne XVIII-XVIII de la figure 17) ;

- la figure 19 illustre enfin une autre variante du détendeur de la figure 15, avec cloison mobile en piston et entraînement par crémaillère.

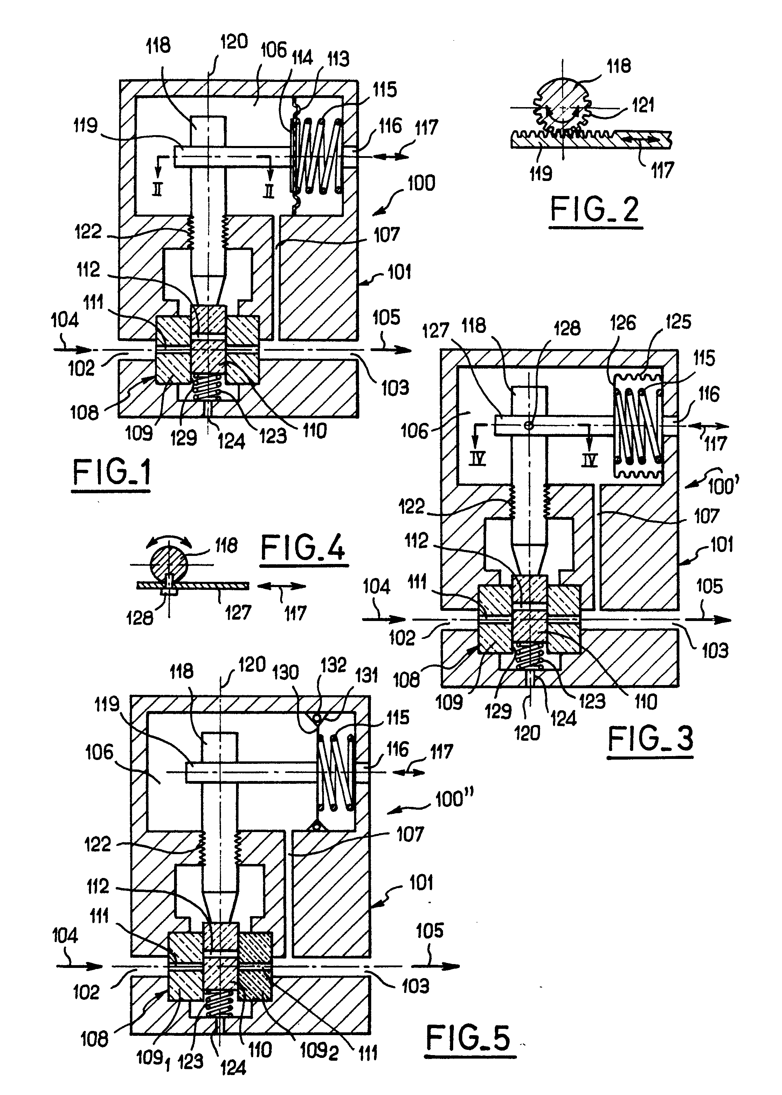

La figure 1 illustre un détendeur oscillant pour fluide gazeux 100, convenant tout spécialement mais non limitativement pour l'oxygène haute pression, comportant un boîtier 101 muni d'une entrée 102 pour le fluide haute pression et d'une sortie 103 pour le fluide basse pression (le sens de passage du fluide gazeux est schématisé par les flèches associées 104 et 105). Le boîtier 101 comprend une chambre intérieure de détente 106, qui communique en permanence avec la sortie 103 par l'intermédiaire d'un canal associé 107, et périodiquement avec l'entrée 102 par l'intermédiaire d'un système d'étanchéité 108 susceptible d'osciller entre une position d'ouverture et une position de fermeture.

Conformément à une caractéristique essentielle de l'invention, le système d'étanchéité est essentiellement constitué par une partie fixe en céramique et une partie mobile également en céramique, lesdites parties étant en permanence en contact glissant l'une contre l'autre et comportant chacune une ouverture traversante pour établir ou fermer la communication selon la position relative desdites ouvertures ; de plus, la partie mobile en céramique est reliée à un système d'entraînement assurant un mouvement de translation et/ou de rotation à ladite partie mobile, ledit système d'entraînement étant lui-même accouplé à une cloison mobile de la chambre de détente.

Dans le cas du détendeur oscillant 100 illustré en figure 1, le système d'étanchéité 108 est essentiellement constitué par une partie fixe 109 en céramique et une partie mobile 110 en céramique, ladite partie mobile en céramique étant réalisée sous forme d'un tiroir coulissant mobile en translation contre ladite partie fixe en céramique. La partie fixe 109 en céramique comporte une ouverture traversante 111, tandis que la partie mobile 110 en céramique comporte également une ouverture traversante 112. Il est aisé de comprendre que la communication est réalisée lorsque les ouvertures traversantes 111 et 112 sont alignées.

Il convient maintenant de décrire les moyens permettant de faire osciller à une fréquence élevée la partie mobile 110 en céramique, afin d'établir et de fermer périodiquement la communication au niveau du système d'étanchéité 108.

Dans le cas de la figure 1, la chambre de détente 106 comporte une cloison mobile constituée par une membrane 113 dont la partie centrale est rigidifiée, par exemple en étant collée contre une coupelle 114. Un ressort 115 est prévu en appui contre la partie centrale de la membrane, à l'extérieur de la chambre de détente 106, pour constituer un moyen de rappel de la cloison mobile tendant a rappeler en permanence le système d'étanchéité vers sa position d'ouverture. Ce ressort 115 est en fait un ressort de tarage du détendeur, et son utilisation est tout à fait classique, notamment dans le domaine de l'aéronautique. Une ouverture 116 est en outre prévue dans le boîtier, afin de permettre pour le détendeur une prise de référence à la pression atmosphérique. D'autres systèmes peuvent naturellement être envisagés à la place de ce ressort de tarage, par exemple en prévoyant un microdétendeur délivrant une pression de pilotage prédéterminée. La flèche 117 indique la direction d'oscillation de la cloison mobile 113 de la chambre de détente, cette direction étant ici essentiellement perpendiculaire à celle du déplacement dudit tiroir coulissant 110. Il est alors prévu un système d'entraînement essentiellement constitué par une tige formant poussoir d'actionnement 118, dont une extrémité contacte le tiroir coulissant 110, et par un organe de transmission 119 solidaire de la cloison mobile et assurant une rotation de la tige 118 autour de son axe 120. La figure 2 permet de mieux distinguer le système de transmission utilisé, l'organe de transmission 119 étant une crémaillère coopérant avec une denture extérieure 121 de la tige d'actionnement 118. Afin de transformer en mouvement de translation le mouvement de rotation de la tige 118 autour de son axe 120, il est prévu une liaison filetée 122 entre la tige 118 et le boîtier 101. Par ailleurs, il est avantageux de prévoir un ressort 123 à l'action duquel est soumis le tiroir coulissant 110 en céramique, ledit ressort tendant à rappeler ledit tiroir coulissant contre l'extrémité adjacente de la tige d'actionnement 118 faisant partie du système d'entraînement. Un orifice 124 de mise à l'air libre sera de préférence prévu dans le boîtier 101 au voisinage du ressort 123, afin d'éviter toute perturbation dans le fonctionnement du détendeur oscillant lors du mouvement oscillatoire du tiroir coulissant 110.

Ainsi, lors du fonctionnement du détendeur oscillant 100, la vibration de la membrane 113 formant cloison mobile de la chambre de détente 106 commande directement le mouvement oscillatoire du tiroir en céramique 110 de façon à établir ou fermer périodiquement la communication selon la position relative des ouvertures traversantes correspondantes 111 et 112.

Il est aisé de constater que le détendeur oscillant qui vient d'être décrit présente d'excellentes caractéristiques de fiabilité et d'étanchéité, ainsi qu'une aptitude particulièrement satisfaisante à l'application pour l'oxygène haute pression en raison de son système d'étanchéité particulier constitué par un ensemble de deux pièces en céramique 109 et 110, qui sont en permanence en contact glissant l'une contre l'autre. En effet, les céramiques présentent une température d'inflammation extrêmement élevée, et l'on peut considérer que le système est pratiquement insensible aux augmentations de température par compression adiabatique, c'est-à-dire pour des zones de température pouvant dépasser 1 000°C avec de l'oxygène gazeux. Le fait que la céramique ne réagisse pas avec l'oxygène supprime tout risque d'inflammation, et la dureté du matériau évite en outre les phénomènes d'érosion et/ou de déformation qui pourraient être générateurs de micro-particules inflammables. On pourra utiliser divers types de céramiques, et de préférence des céramiques à base d'alumine.

De nombreuses variantes sont naturellement possibles à partir de ce concept général, et on va maintenant s'attacher à en décrire quelques exemples.

Le détendeur oscillant 100' illustré à la figure 3 est très proche du détendeur oscillant précédent, de sorte que les organes identiques seront affectés des mêmes références. Le changement concerne en fait essentiellement le système d'entraînement de la tige 118. On constate en effet que la cloison mobile de la chambre de détente 106 est constituée par un soufflet 125, dont la partie centrale 126, éventuellement rigidifiée, est soumise à l'action du ressort 115, prévu à l'extérieur de la chambre de détente, pour constituer les moyens de rappel de ladite cloison mobile. La partie centrale 126 du soufflet 125 porte en outre une biellette 127 coopérant avec un pion de liaison 128 prévu sur la tige d'actionnement 118. Le détail d'accouplement entre la biellette 127 et la tige d'actionnement 118 est mieux visible sur la coupe partielle de la figure 4. Le fonctionnement du détendeur oscillant 100' est par ailleurs tout à fait identique à celui du détendeur oscillant 100 précédemment décrit.

Sur la figure 5, le détendeur oscillant 100'' constitue une autre variante du détendeur précédent. Tout d'abord, dans le cas des détendeurs oscillants illustrés aux figures 1 et 3, on a illustré un tiroir coulissant 110 se déplaçant dans un évidement 129 de la partie fixe en céramique 109. Sur la figure 5, le même tiroir coulissant 110 se déplace maintenant entre deux lames en céramique $109_1$ et $109_2$ constituant la partie fixe du système d'étanchéité 108. L'usinage en est facilité, et le coût de production abaissé. Par ailleurs, la cloison mobile supportant l'organe de transmission 119 (ici par crémaillère) est maintenant réalisée sous forme d'un piston 130 coulissant de façon étanche dans le boîtier 101 : la collerette périphérique 131 de ce piston 130 présente à cet effet un joint 132 préservant l'étanchéité de la chambre de détente 106. Comme précédemment, un ressort 115 est prévu en appui contre la face arrière de la cloison mobile, à l'extérieur de la chambre de détente 106, pour constituer les moyens de rappel de ladite cloison mobile.

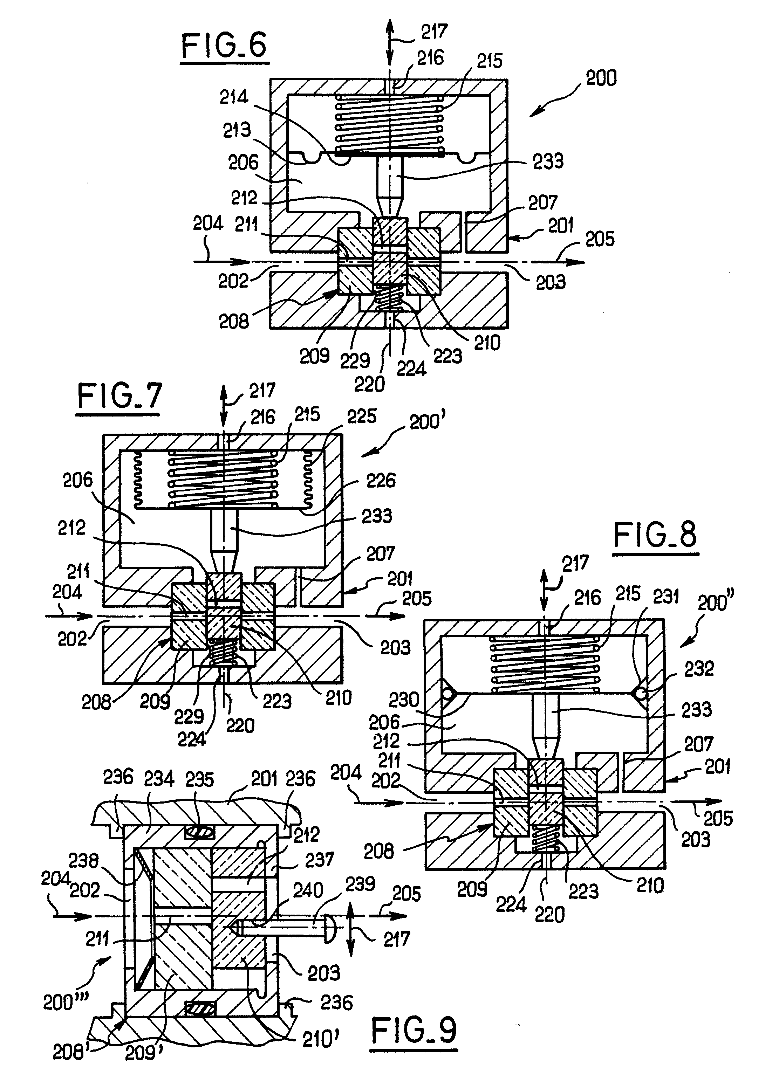

Les variantes des figures 6 à 9 illustrent d'autres détendeurs oscillants conformes à l'invention, dans lesquels la direction d'oscillation de la cloison mobile de la chambre de détente est sensiblement parallèle à la direction de déplacement du tiroir coulissant.

La figure 6 illustre ainsi un détendeur oscillant 200, comportant un certain nombre d'organes analogues à ceux des détendeurs précédents, mais avec un système d'entraînement légèrement modifié. Pour ne pas alourdir la description, les organes inchangés seront affectés pour le détendeur 200 des mêmes références que précédemment, augmentées du nombre cent (boîtier 201, entrée et sortie 202 et 203, chambre de détente 206, canal de communication 207, système d'étanchéité 208 avec tiroir en céramique 210 coulissant contre une partie fixe en céramique 209, ouvertures traversantes associées 211 et 212). Du fait de la présence d'une direction commune de déplacement des parties mobiles (axe 220), la structure du système d'entraînement peut être réalisée de façon plus simple : ce système est en effet ici essentiellement constitué par une tige formant poussoir d'actionnement 233, dont une extrémité contacte le tiroir coulissant 210, et reliée par son autre extrémité à la cloison mobile de la chambre de détente 206. Cette simple tige poussoir 233 peut être par exemple montée sur la coupelle de renforcement 214 de la membrane 213 constituant la cloison mobile du détendeur oscillant. On retrouve par ailleurs le ressort de tarage 215 en arrière de la cloison mobile, et l'orifice de prise de référence associé 216. La flèche 217 rappelle la direction d'oscillation de la cloison mobile, donc de la tige d'actionnement 233, direction ici confondue avec celle 220 du tiroir coulissant en céramique 210.

La figure 7 illustre une variante du détendeur précédent, dans laquelle la membrane constituant la cloison mobile est remplacée par un soufflet 225 dont la partie centrale 226 peut être rigidifiée, le ressort 215 étant en appui contre ladite partie centrale, à l'extérieur de la chambre de détente 206. Ce détendeur oscillant 200' constitue une variante qui est exactement l'homologue de celle déjà décrite en regard de la figure 3.

De la même façon, en référence à la figure 8, le détendeur oscillant 200'' comporte une cloison mobile constituée par un piston 230 coulissant de façon étanche dans le boîtier 201 (on retrouve la collerette 231 et le joint associé 232, de façon analogue au détendeur décrit en référence à la figure 5). Là encore, le ressort 215 est en appui contre le piston 230, à l'extérieur de la chambre de détente 206.

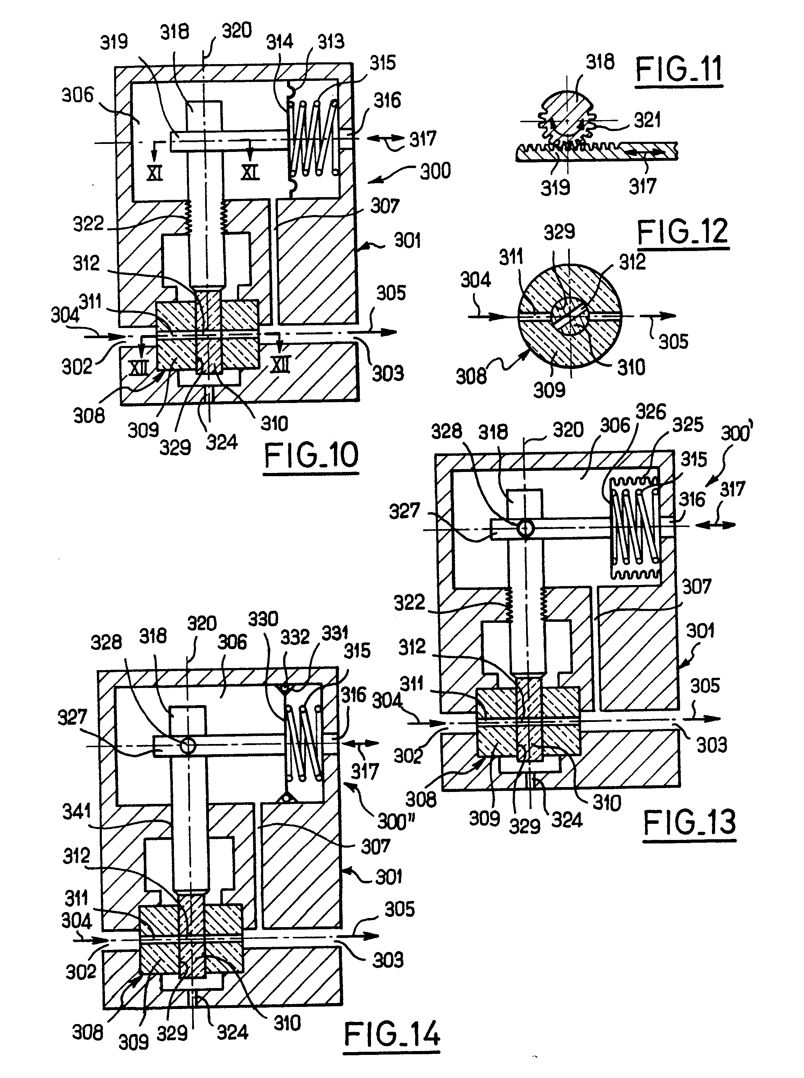

Il convient de noter que la partie fixe en céramique 209 pourrait naturellement être remplacée par deux lames indépendantes en ceramique, comme cela était le cas pour le détendeur oscillant 100″ de la figure 5. On pourrait encore réaliser, dans une autre variante, la partie mobile en céramique 210 sous la forme d'un boisseau, à la façon des variantes qui vont être décrites ci-après en référence aux figures 10 à 14.

Le système d'entraînement qui vient d'être décrit en regard des figures 6, 7, 8 est particulièrement simple, dans la mesure où il est aisé de fixer une simple tige poussoir 233 sur la cloison mobile (membrane, soufflet, piston). Il va de soi cependant que l'on pourrait remplacer ce système par un agencement à levier pivotant dont le mouvement serait commandé par la cloison mobile : l'utilisation d'un système de renvoi représente une certaine complication de la structure du détendeur, mais ce système peut s'avérer avantageux dans certaines applications sévères en raison de la démultiplication des efforts qu'il permet d'obtenir.

La figure 9 illustre une autre variante du système d'étanchéité, dans laquelle le tiroir coulissant en céramique se déplace contre une lame fixe unique. Il est en effet aisé de comprendre que, dans les variantes précédemment décrites, la question de l'étanchéité n'est primordiale entre les pièces mobile et fixe en céramique qu'au niveau de l'entrée haute pression, autrement dit en aval de l'ouverture traversante 112 ou 212 de la pièce mobile en céramique. Ceci explique que l'on peut fort bien se limiter à la présence d'une lame fixe et d'une lame mobile en céramique. La figure 9 ne concerne en fait que le système d'étanchéité, le restant du détendeur 200‴ illustré pouvant être réalisé conformément à l'une quelconque des figures 6 à 8. On distingue ainsi un système d'étanchéité 208′ logé dans une cage 234 disposée de façon étanche dans le boîtier 201 (joint torique d'étanchéité 235). Le positionnement de cette cage 234 est assuré par des butées 236 du boîtier. En amont et en aval de cette cage, considérant les flèches de circulation 204 et 205 du fluide gazeux, on retrouve respectivement une entrée 202 et une sortie 203. La partie fixe en céramique est réalisée sous la forme d'une lame unique 209′ contre laquelle glisse une lame mobile en céramique 210′ sous forme de tiroir coulissant. Le maintien du tiroir mobile 210′ est assuré par un épaulement 237 de la cage 234 d'une part, et par un ressort de type Belleville 238 agissant sur la lame fixe 290′ d'autre part. Le tiroir coulissant 210′ présente un organe de liaison 239 (par exemple un rivet monté transversalement dans un alésage 240) permettant une liaison d'accouplement (directement ou indirectement) à une tige d'actionnement faisant partie du système d'entraînement. La flèche 217 rappelle encore le mouvement d'oscillation du tiroir coulissant 210′ commandé par le déplacement de la cloison mobile de la chambre de détente.

Les figures 10 à 14 illustrent un autre type de détendeur oscillant conforme à l'invention, dans lequel la partie mobile en céramique du système d'étanchéité est un boisseau mobile en rotation et translation (figures 10 et 13), ou en rotation seulement (figure 14). Pour mémoire, il est rappelé que le cas d'un boisseau mobile en translation pure a déjà été prévu en regard des figures 6 à 8 précédentes.

Les détendeurs oscillants illustrés aux figures 10 à 14 comportent naturellement des composants analogues à ceux déjà décrits en regard des figures 1 à 5. Comme précédemment, on utilisera les mêmes références pour ces composants, augmentées du nombre deux cents. On retrouve ainsi, pour les détendeurs oscillants 300, 300′ et 300″ des figures 10, 13 et 14, un boîtier 301, une entrée et une sortie 302 et 303, une chambre de détente 306, un canal de communication 307, un système d'étanchéité 308 avec une partie mobile en céramique 310 (en l'espèce le boisseau) coulissant dans une partie fixe en céramique 309, des ouvertures traversantes respectives 311 et 312, un ressort de tarage 315 et un orifice de prise de référence associé 316.

Sur la figure 10, on distingue plus précisément un boisseau cylindrique en céramique 310, coulissant dans un flasque cylindrique en céramique 309, ledit boisseau étant accouplé en rotation et en translation à la tige d'actionnement 318 du système d'entraînement. Comme pour les figures 1, 3, 5, la tige d'actionnement 318 est reliée au boîtier 301 par une liaison filetée 322, et le mouvement de rotation de la tige autour de son axe 320 est ici assuré par un système à crémaillère plus visible sur la coupe de la figure 11, comme pour la variante de la figure 1. On pourra en particulier prévoir une liaison par collage ou par tout moyen équivalent entre l'extrémité inférieure de la tige d'actionnement 318 et le boisseau en céramique 310 coulissant dans l'alésage 329 de la partie fixe en céramique 309. Dans ce cas, on peut se passer du ressort 123 des premières variantes, mais on laisse cependant subsister l'orifice de mise à l'air libre 324 pour éviter toute interférence avec un bon fonctionnement du détendeur oscillant. La coupe de la figure 12 permet de mieux distinguer le système d'étanchéité 308 par boisseau cylindrique en céramique.

La figure 13 illustre une variante directe du détendeur oscillant précédent, dans laquelle la membrane 313 a été remplacée par un soufflet 325, et le système d'entraînement utilise une biellette 327 coopérant avec un pion de liaison 328 prévu sur la tige d'actionnement 318. Plus généralement, chaque fois que l'on utilisera une liaison à vis entre la tige d'actionnement et le boîtier (cas des figures 1, 3, 5, 10, 13) il sera naturellement avantageux de prévoir des moyens additionnels d'étanchéité au niveau de celle liaison.

La variante de la figure 14 est surtout intéressante en ce qu'elle illustre un boisseau 310 mobile en rotation seulement, et non plus en translation. Le système d'entraînement utilisé peut être choisi parmi les systèmes précédemment décrits (ici une biellette 327 montée sur le piston 330 constituant la cloison mobile de la chambre de détente 306). On trouve ainsi une liaison 341 entre la tige d'actionnement 318 et le boîtier 301, liaison ou palier glissant préservant le mieux possible l'étanchéité (l'homme de l'art pourra naturellement utiliser tout système connu à cet effet, et si nécessaire un manchon rapporté améliorant les caractéristiques d'étanchéité). Le système d'étanchéité à rotation pure permet en principe d'utiliser des fréquences de

vibrations plus élevées qu'avec les autres systèmes.

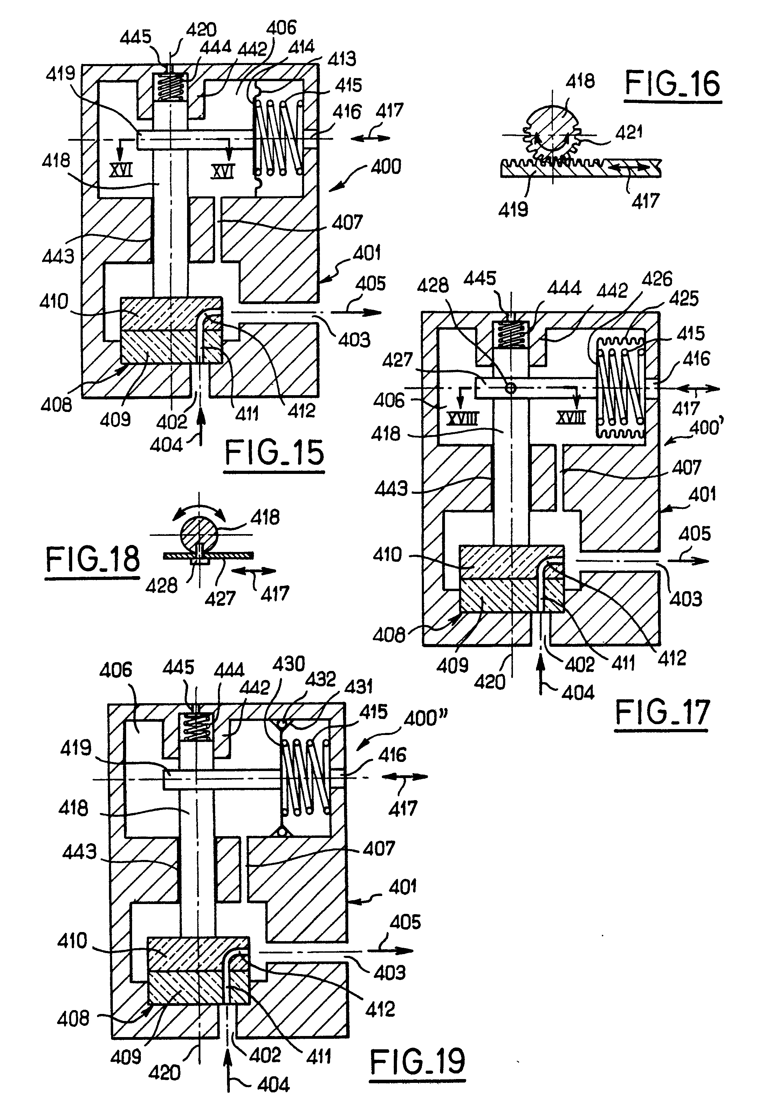

Les figures 15 à 19 illustrent encore un autre type de détendeur oscillant conforme à l'invention, dans lequel la partie mobile en céramique est réalisée sous forme d'un disque tournant, en appui contre la partie fixe en céramique qui est réalisée sous forme d'un disque fixe.

Les détendeurs oscillants de ce type 400, 400', 400" comportent un certain nombre de composants analogues à ceux déjà cécrits en regard des figures 1 à 5, de sorte que l'on adoptera des références analogues augmentées du nombre trois cents. On retrouve ainsi un boîtier 401, une entrée et une sortie 402 et 403, une chambre de détente 406, un canal de communication 407, un système d'étanchéité 408 avec une pièce mobile en céramique 410 (en l'espèce le disque mobile) glissant sur une partie fixe en céramique 409 (en l'espèce le disque fixe).

On distingue plus précisément un disque tournant 410 en appui contre le disque fixe 409, ledit disque tournant étant de préférence soumis, indirectement ou directement, à l'action d'un moyen favorisant son maintien en appui contre le disque fixe 409. En l'espèce, le disque tournant est accouplé en rotation à une tige d'actionnement 418 qui lui est coaxiale, faisant partie du système d'entraînement. Cette tige d'actionnement 418 est montée dans un palier associé 443 du boîtier 401 préservant l'étanchéité du système. L'autre extrémité de la tige d'actionnement 418 (extrémité supérieure sur les dessins) tourne dans une protubérance intérieure 442 du boîtier 401, avec interposition d'un ressort 444 favorisant ainsi le maintien du disque tournant 410 contre le disque fixe 409. Là encore, un orifice de mise à l'air libre 445 sera prévu pour ne pas interférer avec le bon fonctionnement du système. Le disque tournant 410 peut être solidarisé par tout moyen, tel que collage, à l'extrémité de la tige d'actionnement 418, laquelle pourra être réalisée en métal, par exemple en bronze ou en acier inoxydable.

Par ailleurs, le mode de réalisation concerné implique un agencement différent des ouvertures traversantes : le disque fixe 409 comporte ainsi une ouverture traversante 411 sensiblement parallèle à son axe 420, par contre l'ouverture traversante est de préférence coudée pour une sortie dans une direction sensiblement perpendiculaire audit axe. Les directions d'entrée et de sortie du fluide gazeux sont ainsi sensiblement perpendiculaires, comme cela est visible sur la figure 15.

La coupe de la figure 16 illustre un mode d'entraînement en rotation par crémaillère analogue à celui déjà décrit précédemment.

La figure 17 illustre une variante du détendeur oscillant 400 précédemment décrit : le détendeur oscillant 400' diffère du précédent par l'utilisation d'un soufflet 425 et d'un système de transmission par biellette 427 analogue au système déjà décrit, comme on peut le reconnaître sur la coupe partielle de la figure 18. Les autres composants sont quant à eux inchangés, en particulier les éléments fondamentaux en céramique constituant le système d'étanchéité, ces éléments étant ici réalisés sous forme de disque. La figure 19 illustre enfin une autre variante découlant directement de la précédente, le détendeur oscillant 400" comportant une cloison mobile sous forme de piston coulissant 430, et un système d'entraînement par crémaillère 419.

Les variantes qui viennent d'être décrites permettent de bien faire comprendre les nombreux modes possibles de réalisation de l'invention, à partir des caractéristiques fondamentales selon lesquelles le système d'étanchéité est essentiellement constitué par une partie fixe en céramique et une partie mobile en céramique, ces pièces étant en permanence en contact glissant l'une contre l'autre, et par un système d'entraînement de structure très variable assurant un mouvement de translation et/ou de rotation à ladite partie mobile, ce système d'entraînement étant lui-même accouplé à une cloison mobile de la chambre de détente.

Les détendeurs oscillants de ce type sont extrêmement intéressants dans le cas d'utilisation d'oxygène haute pression, car ils parviennent à diminuer très sensiblement les risques d'inflammation que comportaient les détendeurs oscillants déjà connus. On aboutit ainsi à la réalisation de types très variés d'appareils, qui sont de fonctionnement fiable et de structure simple, avec une adaptation à des types très variés d'applications, notamment des applications sévères telles que l'oxygène haute pression (domaine aéronautique ou de la soudure notamment).

L'invention n'est pas limitée aux modes de réalisation qui viennent d'être décrits, mais englobe au contraire toute variante reprenant, avec des moyens équivalents, les caractéristiques essentielles figurant aux revendications.

## Revendications

1. Détendeur oscillant pour fluide gazeux, notamment pour oxygène haute pression, comportant un boîtier muni d'une entrée pour le fluide haute pression et d'une sortie pour le fluide basse pression, ledit boîtier comprenant une chambre intérieure de détente communiquant en permanence avec ladite sortie, et périodiquement avec ladite entrée par l'intermédiaire d'un système d'étanchéité susceptible d'osciller entre une position d'ouverture et une position de fermeture, caractérisé par le fait que le système d'étanchéité (108 ; 208 ; 208' ; 308 ; 408) est essentiellement constitué par une partie fixe en céramique (109 ; $109_1$, $109_2$ ; 209 ; 209' ; 309 ; 409) et une partie mobile en céramique (110 ; 210 ; 210' ; 310 ; 410), lesdites parties étant en permanence en contact glissant l'une contre l'autre et comportant chacune une ouverture traversante (111, 112 ; 211, 212 ; 311, 312 ; 411, 412) pour établir ou fermer la communication selon la position relative desdites ouvertures, et par le fait que la partie mobile en céramique (110 ; 210 ; 210' ; 310 ; 410) est reliée à un système d'entraînement (118 ; 233 ; 318 ; 418) assurant un mouvement de translation et/ou de rotation à ladite partie mobile, ledit système d'entraînement étant lui-même accouplé à une cloison mobile (113 ;

125 ; 130 ; 213 ; 225 ; 230 ; 313 ; 325 ; 330 ; 413 ; 425 ; 430) de la chambre de détente (106 ; 206 ; 306 ; 406), des moyens (115 ; 215 ; 315 ; 415) étant associés à ladite cloison mobile pour tendre à rappeler en permanence ledit système d'étanchéité vers sa position d'ouverture.

2. Détendeur selon la revendication 1, caractérisé par le fait que la partie mobile en céramique est réalisée sous forme d'un tiroir coulissant (110 ; 210 ; 210') mobile en translation contre la partie fixe en céramique (109 ; $109_1$, $109_2$ ; 209 ; 209').

3. Détendeur selon les revendications 1 et 2, caractérisé par le fait que le tiroir coulissant (110 ; 210) se déplace dans un évidement (129 ; 229) de la partie fixe en céramique (109 ; 209) ou entre deux lames ($109_1$, $109_2$) constituant ladite partie fixe.

4. Détendeur selon la revendication 3, caractérisé par le fait que le tiroir coulissant (110 ; 210) est soumis à l'action d'un ressort (123 ; 223) tendant à rappeler ledit tiroir contre l'extrémité d'une tige d'actionnement (118 ; 233) faisant partie du système d'entraînement.

5. Détendeur selon les revendications 1 et 2, caractérisé par le fait que le tiroir coulissant (210') se déplace contre une lame unique (209') constituant la partie fixe en céramique.

6. Détendeur selon la revendication 5, caractérisé par le fait que le tiroir coulissant (210') présente un organe de liaison (239) permettant une liaison d'accouplement à une tige d'actionnement faisant partie du système d'entraînement.

7. Détendeur selon la revendication 1, caractérisé par le fait que la partie mobile en céramique est réalisée sous forme d'un boisseau (3 10) mobile en translation et/ou rotation et coulissant dans un évidement associé (329) de la partie fixe en céramique (309).

8. Détendeur selon la revendication 7, caractérisé par le fait que le boisseau (310) est accouplé en translation et/ou rotation à une tige d'actionnement (318) faisant partie du système d'entraînement.

9. Détendeur selon la revendication 8, caractérisé par le fait que le boisseau (310) est solidarisé, par exemple par collage, à l'extrémité de la tige d'actionnement (318).

10. Détendeur selon la revendication 1, caractérisé par le fait que la partie mobile en céramique est réalisée sous forme d'un disque tournant (410), en appui contre la partie fixe en céramique qui est réalisé sous forme d'un disque fixe (409).

11. Détendeur selon la revendication 10, caractérisé par le fait que le disque tournant (410) est soumis, directement ou indirectement, à l'action d'un ressort (444) favorisant le maintien dudit disque tournant en appui contre le disque fixe (409).

12. Détendeur selon l'une des revendications 10 et 11, caractérisé par le fait que le disque fixe (409) comporte une ouverture traversante (411) sensiblement parallèle à son axe (420), l'ouverture traversante (412) du disque tournant (410) étant de préférence coudée pour une sortie dans une direction sensiblement perpendiculaire audit axe.

13. Détendeur selon l'une des revendications 10 à 12, caractérisé par le fait que le disque tournant (410) est accouplé en rotation à une tige d'actionnement coaxiale (418), faisant partie du système d'entraînement.

14. Détendeur selon la revendication 13, caractérisé par le fait que le disque tournant (410) est solidarisé, par exemple par collage, à l'extrémité de la tige d'actionnement (418).

15. Détendeur selon la revendication 1 et l'une des revendications 2 à 6, dans lequel la direction d'oscillation de la cloison mobile (113 ; 125 ; 130) de la chambre de détente (106) est sensiblement perpendiculaire à la direction de déplacement du tiroir coulissant (110), caractérisé par le fait que le système d'entraînement est essentiellement constitué par une tige formant poussoir d'actionnement (118), dont une extrémité contacte le tiroir coulissant (110) et présentant une liaison filetée avec le boîtier (101), et par un organe de transmission (119 ; 127) solidaire de ladite cloison mobile et assurant une rotation de ladite tige autour de son axe.

16. Détendeur selon la revendication 1 et l'une des revendications 2 à 6, dans lequel la direction d'oscillation de la cloison mobile (213, 225, 230) de la chambre de détente (206) est sensiblement parallèle à la direction de déplacement du tiroir coulissant (210), caractérisé par le fait que le système d'entraînement est essentiellement constitué par une tige formant poussoir d'actionnement (233), dont une extrémité contacte le tiroir coulissant (210), et reliée par son autre extrémité à ladite cloison mobile.

17. Détendeur selon la revendication 1 et l'une des revendications 7 à 9, dans lequel la direction d'oscillation de la cloison mobile (313 ; 325 ; 330) de la chambre de détente est sensiblement perpendiculaire à l'axe du boisseau (310), caractérisé par le fait que le système d'entraînement est essentiellement constitué par une tige d'actionnement (318) dont une extrémité est accouplée au moins en rotation au boisseau, et par un organe de transmission (319 ; 327) solidaire de ladite cloison mobile et assurant une rotation de ladite tige autour de son axe.

18. Détendeur selon la revendication 1 7, caractérisé par le fait que la tige d'actionnement (318) présente une liaison filetée (322) avec le boîtier (301), et est accouplée en rotation et en translation au boisseau (310).

19. Détendeur selon la revendication 1 et l'une des revendications 7 à 9, dans lequel la direction d'oscillation de la cloison mobile (213 ; 225 ; 230) de la chambre de détente (206) est sensiblement parallèle à l'axe du boisseau (210), caractérisé par le fait que le système d'entraînement est essentiellement constitué par une tige formant poussoir 10 d'actionnement (233), dont une extrémité contacte le boisseau, et reliée par son autre extrémité à ladite cloison mobile.

20. Détendeur selon la revendication 1 et l'une des revendications 10 à 14, dans lequel la direction d'oscillation de la cloison mobile (413 ; 425 ; 430) de la chambre de détente (406) est sensiblement perpendiculaire à l'axe du disque mobile (410), caractérisé par le fait que le système d'entraînement est essentiellement constitué par une tige d'actionnement (418) dont une extrémité est accouplée en rotation au disque mobile (410) et par un organe de transmission (419 ; 427) solidaire de ladite cloison mobile et assurant une rotation de ladite tige autour de son axe.

21. Détendeur selon l'une des revendications 15, 17, 18 et 20, caractérisé par le fait que l'organe de transmission est une crémaillère (119 ; 319 ; 419) coopérant avec une denture extérieure de la tige d'actionnement (118 ; 318 ; 418).

22. Détendeur selon l'une des revendications 15, 17, 18 et 20, caractérisé par le fait que l'organe de transmission est une biellette (127 ; 327 ; 427) coopérant avec un pion de liaison (128 ; 328 ; 428) prévu sur la tige d'actionnement (118 ; 318 ; 418).

23. Détendeur selon l'une des revendications 1 à 22, caractérisé par le fait que la cloison mobile est constituée par une membrane (113 ; 213 ; 313 ; 413) dont la partie centrale est rigidifiée, un ressort (115 ; 215 ; 315 ; 415) étant prévu en appui contre ladite partie centrale, à l'extérieur de la chambre de détente (106 ; 206 ; 306 ; 406), pour constituer les moyens de rappel de ladite cloison mobile.

24. Détendeur selon l'une des revendications 1 à 22, caractérisé par le fait que la cloison mobile est constituée par un soufflet (125 ; 225 ; 325 ; 425) dont la partie centrale est rigidifiée, un ressort (115 ; 215 ; 315 ; 415) étant prévu en appui contre ladite partie centrale, à l'extérieur de la chambre de détente (106 ; 206 ; 306 ; 406), pour constituer les moyens de rappel de ladite cloison mobile.

25. Détendeur selon l'une des revendications 1 à 22, caractérisé par le fait que la cloison mobile est constituée par un piston (130 ; 230 ; 330 ; 430) coulissant de façon étanche dans le boîtier (101 ; 201 ; 301 ; 401), un ressort (115 ; 215 ; 315 ; 415) étant prévu en appui contre ledit piston, à l'extérieur de la chambre de détente (106 ; 206 ; 306 ; 406), pour constituer les moyens de rappel de ladite cloison mobile.

EP 0 351 258 A2

FIG_1

FIG_2

FIG_3

FIG_4

FIG_5

FIG.6

FIG.7

FIG.8

FIG.9

FIG_11

FIG_12

FIG_10

FIG_13

FIG_14

FIG_15

FIG_16

FIG_17

FIG_18

FIG_19